(19) **Europäisches Patentamt European Patent Office Office européen des brevets**

(11) **EP 2 688 844 B1**

(12) **EUROPEAN PATENT SPECIFICATION**

(45) Date of publication and mention of the grant of the patent:
**17.03.2021 Bulletin 2021/11**

(21) Application number: **12761195.2**

(22) Date of filing: **26.03.2012**

(51) Int Cl.:
*C02F 1/42* (2006.01)  *C02F 5/08* (2006.01)
*C02F 5/10* (2006.01)

(86) International application number:
**PCT/US2012/030609**

(87) International publication number:
**WO 2012/129572 (27.09.2012 Gazette 2012/39)**

(54) **METHOD FOR RETARDING THE FORMATION OF INSOLUBLE BYPRODUCTS IN WATER SOFTENERS**

VERFAHREN ZUR VERZÖGERUNG DER BILDUNG UNLÖSLICHER NEBENPRODUKTE IN WASSERENTHÄRTERN

PROCÉDÉ POUR RETARDER LA FORMATION DE SOUS-PRODUITS INSOLUBLES DANS DES ADOUCISSEURS D'EAU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.03.2011 US 201161467219 P**
**21.09.2011 US 201161537362 P**

(43) Date of publication of application:
**29.01.2014 Bulletin 2014/05**

(73) Proprietor: **Compass Minerals America Inc.**
**Overland Park, Kansas 66210 (US)**

(72) Inventors:
- **BROWN, Geoffrey A.**
  **Wichita**
  **Kansas 67206 (US)**
- **SHELITE, Kristopher Lee**
  **Moundridge**
  **Kansas 67107 (US)**

- **POE, Jerry**
  **Hutchinson**
  **Kansas 67501 (US)**

(74) Representative: **dompatent von Kreisler Selting Werner -**
**Partnerschaft von Patent- und Rechtsanwälten mbB**
**Deichmannhaus am Dom**
**Bahnhofsvorplatz 1**
**50667 Köln (DE)**

(56) References cited:
EP-A1- 2 226 379     WO-A1-01/58990
GB-A- 1 208 217      JP-A- S60 209 297
JP-A- 2000 005 762   US-A- 3 414 507
US-A- 4 116 860      US-A- 6 004 464
US-A1- 2010 048 445  US-A1- 2010 166 682

EP 2 688 844 B1

**Description**

Field of the Invention

The present invention relates to a method for regenerating a water treatment ion exchange material.

Description of the Prior Art

While potable water is safe to drink and useful for any number of household and commercial applications, it's likely to contain a number of dissolved substances. The levels of two of these dissolved substances, $Ca^{2+}$ and to a lesser degree $Mg^{2+}$, contribute to what is known as water hardness. Hard water is defined as having 7 to 10.5 grains per gallon of $CaCO_3$, or 120 to 180 ppm calcium hardness (also expressed as $CaCO_3$).

Although hard water is not toxic, it causes problems in household and industrial fixtures such as hot water heaters, plumbing, boilers, and heat exchangers. This is due to the low solubility of calcium and magnesium carbonates, and their tendency to precipitate onto surfaces and form scale. Over time, scale buildup can restrict flow in pipes and plumbing, and damage or reduce the efficiency of equipment such as hot water heaters. To compensate for the undesirable effects of hard water, water softening devices are routinely used to remove $Ca^{2+}$ and $Mg^{2+}$ ions from water via a process known as ion exchange. The softening process is beneficial and desirable since it helps protect equipment from the damaging effects of scale accumulation. Hard water can cause a variety of problems related to cleaning and appliance use and can also clog showerheads.

Water softeners work by passing hard water through a material known as a cation exchange resin. The resin has copious negatively charged (anionic) functional groups that bind to positively charged substances (cations), such as calcium and magnesium ions. Over time, the resin becomes saturated with cations and loses its capacity to remove additional $Ca^{2+}$ and $Mg^{2+}$ ions from the source water. Therefore, the resin has to be regenerated by flooding the water conditioner with another cation (typically $Na^+$ or $K^+$) which exchanges with the trapped $Ca^{2+}$ and $Mg^{2+}$ ions.

Although salts such as NaCl and KCl are most often utilized to remove calcium and magnesium ions, their use results in high levels of chloride ions in the effluent produced during regeneration. While these salts play a key role in the beneficial process of softening water, the effluent's high salinity raises the treatment costs and minimizes the potential for the reuse of wastewater for irrigation. Even with the additional treatment costs, typical wastewater treatment facilities remove very little chloride. As a result, the use of traditional salt regenerants such as NaCl and KCl has resulted in regulatory and environmental scrutiny. For example, in 2009 the State of California enacted Water Code Section 13148, which impacts water softener effluents. Under this law, any local agency that owns or operates a community sewer system or recycling facility is authorized to take action to protect water quality by controlling the salinity contributions from water softeners that use salt brine to regenerate the ion exchange resin. Enforcement of this law can entail the physical removal of previously installed water conditioners from residences and/or prohibiting the installation of such equipment.

In addition to chloride, certain local regulatory agencies have expressed concerns about the amount of sodium entering waste treatment facilities, much of which comes from using sodium chloride in water softeners. There is some belief that sodium offers no real environmental value outside of ecosystems in saltwater or brackish water, and at least one municipality has effectively banned the use of any water softener salt containing any level of sodium. The environmental and regulatory positions taken underscore the need for water softener brine regenerants that reduce, or at least significantly lower, the levels of chloride and sodium ions in the effluent discharged.

WO 01/58990 refers to a non-chloride containing regenerant composition for regenerating a strong acid cation exchange resin consisting essentially of 5 to 60 wt.-% of at least one potassium salt selected from the group consisting of potassium acetate and potassium formate, 0.0005 to 0.1 wt.-% of at least one surfactant and 0.01 to 1 wt.-% of at least one sequestering agent, the balance being water.

GB 1 208 217 discloses a process for the regeneration oa an ion-exchange resin operating in acid cycle substantially exhausted with ions of bivalent metal, in which for increasing the efficient exchange capacity of the resins, sulphuric acid of at least 4% concentration is used as regenerating solution in the presence of a complexing agent for the bivalent metal forming soluble compounds therewith at a volume velocity of 2 to 15 volumes of the regenerating solution per volume of the resin per hour.

US 4,116,860 claims a composition for regenerating weak acid cation exchange resin comprising 70 to 80 wt.-% alkali metal chloride, 5 to 15 wt.-% alkali metal carbonate, the balance being alkali metal chelating polycarboxylate.

US 2010/048445 relates to an agent for the preventive and/or curative cleaning of material in contact with water, characterized in that it includes sodium chloride and at least one dispersant detergent and/or a non-ionic surfactant having at least one detergent action and at least one oxidizing agent, the oxidizing agent being selected from solid-form precursors of hydrogen peroxide and the cleaning agent being in solid form, such as pellets, granules, bars, tablets, large pellets or powder, the salt(s) being used as binders between the various components.

US 3,414,507 describes a method of softening hard water containing at least 100 ppm sodium and at least 30 ppm hardness comprising the steps: (a) pre-treating said hard water with a strong acid cation exchange material to reduce the hardness content to less than 30 ppm; (b) passing said partially softened water through a carboxylic acid cation exchange material to completely remove hardness therefrom; (c) periodically contacting said carboxylic acid cation exchange material with a regenerating agent selected from the group consisting of calcium chelating agents, magnesium chelating agents and mixtures of calcium and magnesium chelating agents.

While currently available chloride-free water softener regenerants are highly desirable alternatives to traditional products, they have significant drawbacks. For instance, using the sodium or potassium salts of organic acids, such as citrate, succinate, acetate, could be cost prohibitive. Moreover, with high sustained use, they would continuously contribute a substantial amount of additional organic material to the municipal wastewater treatment system. A sustained influx of these organic compounds could increase the Biochemical Oxygen Demand (B.O.D.), which may require additional remediation at the waste treatment facility.

Compositions and methods that mitigate the formation of these and other precipitants could prove commercially desirable, given the restrictions on chloride discharge in some parts of the country. There is a need for an environmentally friendlier water softener regenerant that significantly reduces or eliminates the amounts of undesirable salinity components. Moreover, there is a need for an environmentally friendlier regenerant that produces effluents that are acceptable and beneficial for irrigating and/or fertilizing vegetation such as lawns, crops and garden plants. Particularly, those regenerants should avoid the formation of undesirable precipitates during the water softening process.

SUMMARY OF THE INVENTION

The present invention overcomes the problems of the prior art by providing a method of treating water according to claim 1. The method comprises contacting an ion exchange material with an aqueous solution or dispersion comprising ions produced from a chloride-free salt and a chelating agent to yield a regenerated ion exchange material.

DETAILED DESCRIPTION OF THE PREFERRED EMBODIMENTS

The present invention is concerned with a method of softening water according to claim 1 using a salt product that comprises a chelating agent intermixed with a chloride-free salt. The product preferably comprises from about 50% to about 70% by weight chloride-free salt, more preferably from about 80% to about 90% by weight chloride-free salt, and even more preferably from about 95% to about 99% by weight chloride-free salt, based upon the total weight of the product taken as 100% by weight. The product also preferably comprises from about 1% to about 50% by weight chelating agent, more preferably from about 1% to about 30% by weight chelating agent, and even more preferably from about 1% to about 10% by weight chelating agent, based upon the total weight of the product taken as 100% by weight. The weight ratio of chloride-free salt to chelating agent in the product is preferably from about 1:1 to about 99:1, more preferably from about 2.3:1 to about 19:1, and even more preferably from about 4:1 to about 9:1. The chloride-free salt is selected from the group consisting of $K_2SO_4$, $NaHCO_3$, $Na_2SO_4$, $NaH_2PO_4$, $KHCO_3$, $KH_2PO_4$, $K_2HPO_4$, $K_3PO_4$, $Na_3PO_4$, $Na_2CO_3$, $K_2CO_3$, and mixtures thereof. The chelating agent is selected from the group consisting of polyacrylic acid, polymaleic acid, polyaspartic acid, and mixtures thereof.

The product can be prepared by physically mixing the chloride-free salt and chelating agent in the desired amounts to create a substantially homogenous blend of the two, where each component is uniformly intermixed. That is, the ingredients (when solids) can be individually provided as discrete pieces (i.e., in particulate form, such as salt pellets, cubes, granules, or crystals), which can then be physically or mechanically mixed together, bagged, and sold. Alternatively, the product can also be provided in the form of a self-sustaining body comprising the chloride-free salt and chelating agent compacted together into a single salt product. The compacted product can then be provided in the form of pellets, cubes, granules, pieces, or crystals, where each pellet, cube, etc. comprises a compacted admixture of the chloride-free salt to chelating agent. Suitable methods of compacting are known in the art (see e.g., U.S. Patent App. Pub. No. 2009/0127502). The chloride-free salt and chelating agent are preferably substantially uniformly dispersed or intermixed in the compacted salt product.

A number of additional optional ingredients can also be included in the product, such as binders, cleaning agents, dispersants, wetting agents, dry acids, and mixtures thereof. For example, the product can further comprise a binder selected from the group consisting of sorbitol, alkali metal phosphates, and mixtures thereof. A particularly preferred binder comprises an aqueous mixture of sorbitol and an alkali metal phosphate, as described in U.S. Patent App. Pub. No. 2009/0127502. Examples of suitable alkali metal phosphates include those selected from the group consisting of sodium phosphates, disodium phosphates, sodium polyphosphates, potassium phosphates, potassium polyphosphates, and mixtures thereof. A particularly preferred alkali metal phosphate is sodium hexametaphosphate.

Although the above optional ingredients can be included, none of these ingredients provide a source of chloride ions. That is, the product is essentially free (i.e., less than about 3% by weight chlorine, preferably less than about 1% by weight chlorine, more preferably less than about 0.5% by weight chlorine, and even more preferably about 0% by weight chlorine) of chlorine.

The moisture content of the product will preferably be from about 0.01% to about 0.3% by weight, preferably from about 0.03% to about 0.1% by weight, and more preferably from about 0.05% to about 0.07% by weight, based upon the total weight of the product taken as 100% by weight.

In one aspect, the product consists essentially of, and preferably consists of, the chloride-free salt and chelating agent. In another embodiment, the product consists essentially of, and preferably consists of, the chloride-free salt, chelating agent, and a binding agent.

The product can be used in conventional water softeners according to the instructions for the particular water softener. In one embodiment, the product preferably comprises food grade salts (i.e., safe for human consumption in levels expected to be present in water treated with the product), although this is not mandatory in some embodiments. In use, the ion exchange material in the water softener becomes saturated with calcium and magnesium ions removed from the incoming water and depleted of sodium and potassium ions.

The present method of recharging the ion exchange material comprises contacting the ion exchange material (e.g., styrene copolymerized with divinyl benzene) with an aqueous solution or dispersion comprising the product during the regeneration cycle of the water softening system. This replenishes the ion exchange material with sodium and potassium ions and removes the calcium, magnesium, or other ions previously removed from the incoming water. The aqueous solution or dispersion containing the product will have (or lack) the same ingredients as described above with respect to the product (except in ionic form, in most instances). It is preferred that the product be added at sufficient levels so that the aqueous solution or dispersion comprises from about 1% to about 10% by weight chloride-free salt, preferably from about 3% to about 7% by weight chloride-free salt, and more preferably from about 4% to about 6% by weight chloride-free salt, based upon the total weight of the solution or dispersion taken as 100% by weight. Furthermore, the aqueous solution or dispersion should comprise from about 0.3% to about 4% by weight chelating agent, preferably from about 1% to about 2% by weight chelating agent, and more preferably from about 1.5% to about 2% by weight chelating agent, based upon the total weight of the solution or dispersion taken as 100% by weight.

The aqueous solution or dispersion can be formed in several ways. The chloride-free salt and chelating agent could be combined independently (separately) in the water, either one after the other, or at the same time. The optional ingredients could be similarly added to the water. Or, they could be added together, either as a "loose" mixture/dispersion/suspension (depending upon whether any of the ingredients are in liquid form) or as a self-sustaining body.

Next, water to be treated is contacted with the ion exchange material in the softener that has been regenerated or recharged with the product so that the metal ions of the salts will replace the undesirable ions present in the water. Thus, by following the present invention, at least about 80% by weight, preferably at least about 85% by weight, preferably at least about 90% by weight, and preferably at least about 95% by weight metal ion removal is achieved. More particularly, at least about 90% by weight, preferably at least about 95% by weight, and more preferably at least about 99% by weight calcium ions are removed, and at least about 95% by weight, preferably at least about 98% by weight, and more preferably at least about 99% by weight magnesium ions are removed. The percentages by weight are determined by comparing the quantity of the particular metal ions in the conditioned water to that in the water immediately prior to conditioning and determining the percent of metal ions removed.

Furthermore, by following the present invention, at least about 80% by weight, preferably at least about 85% by weight, preferably at least about 90% by weight, and preferably at least about 95% by weight removal of the metal-containing material is achieved. More particularly, at least about 90% by weight, preferably at least about 95% by weight, and more preferably at least about 99% by weight calcium-containing material (e.g., calcium carbonate) is removed, and at least about 95% by weight, preferably at least about 98% by weight, and more preferably at least about 99% by weight magnesium-containing material (e.g., magnesium carbonate) is removed. The percentages by weight are determined by comparing the quantity of the particular metal-containing material in the conditioned water to that in the water immediately prior to conditioning, and determining the percent removed. Thus, the resulting softened water comprises sodium and potassium ions (in place of the calcium and magnesium ions found in the untreated water).

The product has a number of significant advantages over prior art salt products. For example, the effluent produced will be essentially chloride-free, as discussed above with respect to the product. Additionally, the present invention will at least minimize, and preferably avoid, the formation of insoluble and/or sparingly soluble byproducts such as these selected from the group consisting of calcium sulfate, calcium phosphate, calcium carbonate, magnesium carbonate, magnesium phosphate, barium carbonate, and barium sulfate. More particularly, the effluent will be essentially free of these byproducts (i.e., the effluent will comprise less than about 0.5% by weight, preferably less than about 0.1% by weight, and preferably about 0% by weight of these byproducts). Finally, because the effluent is as described above, it could be used to treat/water vegetation in gardens, at golf courses, etc.

EXAMPLES

The following examples set forth preferred methods in accordance with the invention. It is to be understood, however, that these examples are provided by way of illustration and nothing therein should be taken as a limitation upon the overall scope of the invention.

MATERIALS AND METHODS

Initial studies were conducted in beakers to determine if chelating agents could prevent or retard the formation of low Ksp calcium-containing salts such as calcium sulfate, calcium carbonate, and calcium phosphate. For these initial experiments, 1 g of a chloride-free salt ($K_2SO_4$, $NaHCO_3$, or $NaH_2PO_4$) and 1 g of a chelating agent (sodium succinate, sodium citrate, Versaflex One®, or dimethylhydantoin) were dissolved in 97 g of ultrapure water (18 megaohms resistance). After dissolving, 1 g of $CaCl_2$ was added and stirred to dissolve. The formation of low Ksp calcium salts formed almost immediately in the control beakers (without a calcium chelating agent).

Subsequent experiments were performed in laboratory scale water conditioners. Conditioners were filled with 250 mL of Culligan® Cullex® water softening resin (Benzene, Diethyl-, Polymer with ethenylbenzene and ethenylethylbenzene sulfonated sodium salt). Typical water conditioners are filled with one cubic foot ($ft^3$) of cation exchange resin. Since one liter is equivalent to $0.053$ $ft^3$, 250 mL equates to $0.0088ft^3$.

Experiments in the bench top conditioners evaluated the ability of chloride-free salts ($K_2SO_4$, $Na_2SO_4$, $NaHCO_3$, and $KH_2PO_4$) to efficiently remove calcium ions from the ion exchange resin. To wet the resins, 250 mL of ultrapure water were poured through each conditioner, followed by 1.25 L of Lyons, Kansas tap water. A Taylor Service Complete [High] test kit showed the hardness of the influent tap water to be 290 ppm.

Saturated brine solutions were prepared for the bench top conditioners by placing about 300 g of NaCl, $K_2SO_4$, $Na_2SO_4$, $NaHCO_3$, $NaH_2PO_4$, and $KH_2PO_4$ into separate, 600-mL beakers. Approximately 300 mL of tap water were placed in each beaker and stirred to make brine. Brine solutions were diluted 1:4, unless otherwise noted, and were used with and without calcium-chelating agents.

In addition to using the Taylor test kit, calcium was measured as % calcium via titration, using the following procedure:

(1) Summary of the procedure: An aliquot of the diluted sample containing calcium ion is buffered to pH 12. Hydroxy Naphthol Blue is added as the indicator, and the solution is titrated with a standardized solution of EDTA. The endpoint col or change is from red to blue.

(2) Reagents

a. Standard Calcium Solution; 0.2 mg/mL

i) Weigh out 0.5g of calcium carbonate.

ii) Put in a one-liter volumetric flask.

iii) Add water to make a volume of approximately 100 mL.

iv) Add HCl until all of the calcium carbonate is dissolved.

v) Dilute to volume or use 1,000 ppm Calcium AA standard = 1 mg/mL.

b. Standard Calcium Solution; 1.7 mg/mL

(i) Weigh out 4.245 g of calcium carbonate.

(ii) Put it in a one-liter volumetric flask.

(iii) Add water to make a volume of approximately 100 mL.

(iv) Add HCl until all the calcium carbonate is dissolved.

(v) Dilute to volume or use 1 mg/mL Calcium AA standard.

c. Standard EDTA Solution

(i) Dissolve 288 g of EDTA (the disodium salt) and 0.4 g of magnesium chloride hexahydrate in approximately 1,000 mL of water.

(ii) Dilute to 18 Liters. [Note: for lower concentration EDTA, dilute 10 to 1.]

d. pH 12 Buffer (IN Sodium Hydroxide)

(i) Dissolve 40.08g of NaOH in one liter of water.

e. Hydroxy Naphthol Blue

(i) Use the dry crystal form.

(3) Standardization

a. Titrate a 25-mL aliquot of the standard 0.2 mg/mL calcium solution or 5 mL of the 1 mg/mL standard by pipetting the aliquot into a 250-mL Erlenmeyer flask containing a magnetic stirring bar and dilute to 100 mL.

b. Add 10 mL of pH 12 buffer solution and 100 to 300 mg hydroxy naphthol blue. (When running samples of high magnesium content, check the pH of the solution before adding Hydroxy Naphthol Blue.)

c. Use pH paper with pH 12 in the range. If the pH is not 12, add more buffer until it reaches 12.

d. Titrate the solution with the standardized EDTA to the blue endpoint. Record the titration volume.

e. Calculations

(i) Calculate the standard factor:

$$\frac{A \times B}{C} = F$$

Where: A = Aliquot size of calcium standard;

B = mgs of calcium per mL of calcium standard solution;

C = volume of EDTA in mL used for titration; and

F = mgs of calcium per mL of EDTA.

(ii)

$$\frac{E \times F \times G}{H \times I \times 10} = \%Ca$$

Where: E = Titration volume in mL;

F = Factor (24.3.2) in mg/mL;

G = Dilution volume in mL;

H = Aliquot size in mL; and

I = Sample weight in g.

In addition to the above titration method, calcium and other metals as well as anionic species were also measured by ICP (Inductively Coupled Plasma).

EXAMPLE 1

This example demonstrates the concept of using calcium chelating agents to prevent or reduce the formation of sparingly soluble (low Ksp) salts from forming *in situ.* Very high concentrations of soluble calcium and/or magnesium and high concentrations of certain anions (e.g., sulfate) are required to produce appreciable amounts of a low Ksp salt such as $CaSO_4$.

In separate beakers, 1% (w/w) solutions of $K_2SO_4$ and 1% (w/w) solutions of four chelating agents were prepared. The chelating agents included EDTA, sodium succinate, and Versaflex® ONE (VF-1, a polyacrylate-type chelating agent available from AkzoNobel). After dissolving the $K_2SO_4$ and chelating agents, sufficient $CaCl_2$ was added to give a final concentration of 1% (w/w). A beaker with no calcium chelating agent was incorporated into the experiment as a control. Beakers containing EDTA and succinate completely inhibited formation of $CaSO_4$. The EDTA beaker was somewhat opaque, but without any precipitate. Calcium sulfate precipitate was observed in all the other beakers, including the control.

EXAMPLE 2

The same chelating agents used in Example 1 were used and at the same concentrations. The salts ($NaH_2PO_4$ and $CaCl_2$) were added to give a final concentration of 1%. EDTA completely inhibited the formation of calcium phosphate. Sodium succinate retarded the formation of calcium phosphate but did not completely prevent its formation. Copious calcium phosphate deposits formed quickly in the control beaker.

EXAMPLE 3

The same chelating agents used in Example 1 were used and at the same concentrations. The salts ($NaHCO_3$ and $CaCl_2$) were added to give a final concentration of 1%. Only EDTA completely inhibited the formation of calcium carbonate ($CaCO_3$) precipitate.

EXAMPLE 4 (not according to the invention)

The performance of sodium citrate was evaluated as a calcium chelator. As with Examples 1-3, one percent solutions of $K_2SO_4$, $Na_2SO_4$, $NaHCO_3$, and $NaH_2PO_4$ were prepared, each one also containing 1% sodium citrate. As with Examples 1-3, sufficient $CaCl_2$ was also added to give a concentration of one percent. Citrate effectively prevented the formation of calcium sulfate in the beakers containing $K_2SO_4$ and $Na_2SO_4$ but was not as effective against calcium phosphate or calcium carbonate.

EXAMPLE 5

VF-1 is a known anti-scalant, which retards the formation and deposition of low Ksp calcium salts, such as calcium carbonate, onto surfaces, although it didn't perform as well as the other candidates in the beaker studies (Examples 1-4). The concentration was reduced to 5 ppm in beaker studies to test VE-1's performance. For this experiment, the chloride-free salts comprised $NaHCO_3$, $NaH_2PO_4$, and $K_2SO_4$.

The results confirmed that 5 ppm VE-1 was sufficient to prevent the formation of calcium phosphate and calcium sulfate. VE-1 did not prevent the formation of calcium carbonate under these conditions (from sodium bicarbonate), even though it is known to inhibit the formation of carbonate scale in other water treatment applications.

EXAMPLE 6

A water conditioner was used to demonstrate the ability of $K_2SO_4$ to remove $Ca^{2+}$ and $Mg^{2+}$ ions (i.e., regeneration) from a cation exchange resin in a Culligan® Medallist Softener device. Prior to regeneration, hard tap water containing about 300 ppm hardness was allowed to flow through the softener for 17 hours to trap $Ca^{2+}$ and $Mg^{2+}$ ions onto the exchange resin. Approximately 50 lbs. of $K_2SO_4$ were placed into the brine tank and used to regenerate the resin. The effluents from successive cycles of softening and regeneration were captured in a 1,500-gallon tank. Also, a flow meter was installed on the drain tube that was used to empty the vessel. After repeating the softening/regeneration process a few times, calcium sulfate scale was observed inside a flow meter and on the sides of the collection vessel.

This demonstrates the impracticality of using non-halide salts such as $K_2SO_4$ to regenerate ion exchange resins due to the formation of sparingly soluble calcium and/or magnesium byproducts. Unless mitigating compositions and methods are employed, calcium deposits containing anions such as sulfate, phosphate, or carbonate will foul equipment as well as the downstream plumbing.

BENCH TOP WATER CONDITIONER EXPERIMENTS

EXAMPLE 7

In order to generate empirical data, small scale water conditioning units were utilized. The performance of a traditional NaCl regenerant was compared to $K_2SO_4$ alone and $K_2SO_4$ with VF -1.

Brines of each regenerant were prepared as described in the Experimental section. Each brine was diluted 1:4 with tap water (62 mL brine to 188 mL tap water) to give a final volume of 250 mL to simulate brine dilution within a water softening unit. In addition, an aliquot of a 1% solution of VF-1 was added to one of the $K_2SO_4$ brine dilutions to deliver 3 ppm. The conditioner regenerated with $K_2SO_4$ brine that contained no VF-1 stopped flowing after the second brine rinse.

When the resin from the $K_2SO_4$ conditioner was removed and examined, a prominent layer of insoluble $CaSO_4$ scale was revealed as the cause of the blockage. This was not surprising, since the high levels of free calcium and sulfate ions would be expected to co-precipitate as calcium sulfate (Example 6). The effluents from the bench top conditioners were collected in 1,000-mL beakers. While the NaCl and $K_2SO_4$ + VF-1 effluents were visually indistinguishable after sitting at ambient temperature (about 23 °C) for one hour, calcium sulfate was rapidly produced in the effluent from the $K_2SO_4$ (without VF-1) bench top conditioner.

Four hours later, the NaCl effluent was still clear, but there was a small amount of precipitate on the bottom of the beaker containing $K_2SO_4$ + VF-1. Under actual use conditions, the effluent would not be containerized and allowed to sit for hours without being diluted. In fact, under actual conditions, the resin bed would be rinsed with source water after brine regeneration. This washing process would dilute the effluent, lessening the likelihood for forming insoluble deposits. Additional dilutions by wastewater in the sewer or municipal plumbing system would further reduce the chance of forming unwanted deposits. Not surprisingly though, additional precipitate continued to form in the beaker containing $K_2SO_4$ without VF-1 during this timeframe.

The formation of scale within the bench top conditioner containing $K_2SO_4$ only indicated that calcium ions had been displaced by the $K_2SO_4$ brine. That is, the presence of the precipitate gave evidence that the potassium ions ($K^+$) displaced calcium ions from the resin, which subsequently bound to negatively charged sulfate ions ($SO_4^{2-}$) and formed calcium sulfate ($CaSO_4$). However, since the conditioner containing $K_2SO_4$ + VF-1 did not form appreciable amounts of precipitate, its performance as a water softener regenerant was not yet determined. In order to compare the amounts of calcium removed during the regeneration of the bench top water conditioners, the calcium titration procedure described in the Experimental section was used to measure the amounts of calcium in the effluents from the bench top conditioners regenerated with brines of NaCl and $K_2SO_4$ + VF-1. Since the $K_2SO_4$ + VF-1 conditioner produced a small amount of precipitate over time, the precipitate was collected, dissolved in HCl, and assayed.

The data in Table 1 clearly indicate that the bench top water softener containing $K_2SO_4$ with VF-1 was able to effectively remove calcium. This is surprising given the magnitude of positive and negative charge interactions occurring at all times while the resin was being regenerated.

Table 1 - Calcium Assay in Water Softener Effluents

| Brine | % Calcium Removed |
|---|---|
| NaCl | 66.34 |
| $K_2SO_4$ + VF-1 | 31.73 |

EXAMPLE 8

Examples 1-5 show that polymeric and non-polymeric calcium chelating agents can be used to impede the formation of low Ksp salts. Not all calcium chelating agents were equally effective at hindering the *in situ* production of these unwanted deposits. In keeping with this, VF-1 effectively retarded the formation of $CaSO_4$ when using $K_2SO_4$ in beaker studies and in the bench top water conditioners. Although, VF-1 was less effective in beaker studies conducted with $Na_2SO_4$, sodium citrate was able to prevent $CaSO_4$ from forming (Example 4).

For the bench top water conditioners, brines containing NaCl, $Na_2SO_4$, and $Na_2SO_4$ with 1% sodium citrate were used as regenerants. In each case, 125 mL of brine was diluted to 500 mL with tap water. Sodium citrate (5 g) was added to one of the $Na_2SO_4$ brine solutions to give a final concentration of 1%.

To begin the experiment, 250 mL of tap water was poured through each column and collected in separate 1 L beakers. This was done to simulate the backwashing step that occurs prior to resin regeneration. Next, the brine solutions were poured into the bench top conditioners. Notably, the conditioner containing only $Na_2SO_4$ brine stopped flowing very quickly due to the rapid accumulation of insoluble $CaSO_4$ in the resin bed. Only about 150 mL of brine passed through the conditioner before flow completely stopped. By contrast, the conditioners treated with NaCl brine and $Na_2SO_4$ brine with 1% sodium citrate experienced unrestricted flow throughout. After pouring all 500 mL through the conditioners treated with NaCl or $Na_2SO_4$ brine with 1% sodium citrate, the resin beds were rinsed with an additional 250 mL of tap water to simulate the post-regeneration rinse that occurs in actual water conditioning units.

The effluents from the conditioners exposed to NaCl brine and $Na_2SO_4$ brine with 1% sodium citrate were clear and deposit-free after 30 minutes. After about 1.5 hours, the beaker containing the NaCl was still free of deposits. This was expected since NaCl will not form low Ksp byproducts in water conditioning applications. The beaker containing the effluent from the $Na_2SO_4$/citrate conditioner contained a small amount of insoluble material on the bottom after 1.5 hours. This shows citrate retards the formation of unwanted, sparingly soluble deposits.

EXAMPLE 9

The ability of low molecular weight polyacrylic acid ("PAA," MW of about 2,000, sold by Acros Organics) to prevent the formation of $CaSO_4$ in beakers containing 1% concentrations of $CaCl_2$ and either $Na_2SO_4$ or $K_2SO_4$ was evaluated. Levels of 400 and 1,000 ppm PAA completely prevented the formation of unwanted precipitates for 6 hours in all beakers. After sitting on the lab bench overnight, the beakers contained only traces of precipitate.

Given the outstanding performance in the beaker study, the same low molecular weight PAA was utilized for a subsequent experiment in the bench top water conditioners. For this study, $Na_2SO_4$ and $K_2SO_4$ brines, each containing 1,000 ppm of low molecular weight PAA, were used to regenerate the bench top softeners. Surprisingly though, the PAA failed to prevent the formation of $CaSO_4$ within the conditioners, causing both to stop flowing. Interactions occurring between the dissolved cations ($K^+$, $Na^+$ and $Ca^{2+}$), the anions ($Cl^-$ and $SO_4^{2-}$), and the exchange resin likely reduced PAA's effectiveness.

EXAMPLE 10

Example 8 shows that sodium citrate is able to prevent the formation of $CaSO_4$ when $Na_2SO_4$ brine is used as the regenerant. A subsequent experiment was conducted to determine if a combination of sodium citrate and PAA would be more efficacious than citrate alone. Bench top water conditioners were regenerated with $Na_2SO_4$ brines (500 mL) containing 1% sodium citrate or a mixture of 1% sodium citrate and 1,000 ppm low molecular weight PAA.

The combination of citrate and PAA prevented the formation of deposits in the conditioner and in the effluent. After 3 hours, the beakers containing the effluents were clear. However, after sitting overnight, there was a marked difference in the appearance of these effluents. The effluent from the conditioner treated with citrate only generated a large amount of calcium sulfate scale. By contrast, the effluent from the conditioner with sodium citrate and PAA was clear and free of precipitates.

EXAMPLE 11

Another low molecular weight polymer of acrylic acid with a molecular weight of about 3,000 (Aquatreat® AR 921A-Akzo Nobel) was used to generate data for the present Example. Bench top water conditioners were regenerated with $K_2SO_4$ brines (500 mL) containing either 1,000 ppm AR 921A alone, or 1,000 ppm AR 921A in combination with 3 ppm VF-1. Both combinations effectively prevented scale from forming in the bench top conditioners and in the effluents. After allowing the effluents to sit on the laboratory bench for about 2.5 days, there was a small amount of $CaSO_4$ scale in the effluent with AR 921A, but only a trace amount in the beaker with the combination of AR 921A and VF-1.

EXAMPLE 12

Example 3 teaches that EDTA can prevent the formation of $CaCO_3$ in beakers, even in the presence of percent concentrations of $CaCl_2$ and $NaHCO_3$. Therefore, 500 mL brine solutions containing $NaHCO_3$ alone and in combination with 2% EDTA were prepared and used to regenerate laboratory bench top water conditioning units. In addition, 500 mL $KH_2PO_4$ brines were prepared for concomitant experiments with additional bench top units. For the experiments involving $KH_2PO_4$, brine was used alone and was also mixed with 1,000 ppm AR 921A and 3 ppm VE-1.

In each case, the conditioning units that were subjected to brines that contained no calcium chelating agents (EDTA, AR 921A, and VF-1) stopped flowing due to the rapid accumulation of low Ksp salts. Specifically, $CaCO_3$ formed in the unit treated with $NaHCO_3$ brine and calcium phosphate formed in the unit treated with $KH_2PO_4$ brine. By contrast,

water conditioning units subjected to NaHCO$_3$ brine containing 2% EDTA, and to KH$_2$PO$_4$ brine containing AR 921A and VF-1, flowed freely throughout the regeneration process. In addition, the effluents from these columns remained clear and free of calcium scale deposits after sitting on the lab bench for 48 hour.

The results observed with sodium bicarbonate (NaHCO$_3$) were especially surprising since carbonate is a component of water hardness. In addition, sodium bicarbonate's ability to regenerate ion exchange resin was confirmed by ICP (Table 2).

Table 2 - Sodium Bicarbonate Regenerant Data (ppm (not according to the invention)

| Sample | Na$^+$ | K$^+$ | Ca$^+$ |
|---|---|---|---|
| NaHCO$_3$ + EDTA Brine | 4,627 | 10 | 123 |
| NaHCO$_3$ + EDTA Effluent | 738 | 56 | 2,091 |

EXAMPLE 13

One aspect of the invention describes the application of effluents from commercial or residential water conditioning units that have been regenerated with Group I halide-free, inorganic salt brines that also contain effective calcium chelators as described in Examples 1-12. Traditional water conditioning salts (NaCl and KCl) generate effluents that have high concentrations of Cl$^-$ ions. The presence of Cl$^-$ ions is problematic since high levels are believed to harm vegetation. Therefore, direct application of water conditioner effluents produced with a chloride containing salt onto vegetation is impractical.

The present invention overcomes this shortcoming since the novel methods disclosed are essentially free of chloride. In addition to being safer to apply to vegetation, the effluents will also contain beneficial minerals that will foster plant health, as noted in Table 3.

Commercially available fertilizer compositions can be compared against one another based on form (liquid or solid) and based on the relative percentages of nitrogen, phosphorous, and potassium (NPK). One example of a ready-to-use liquid fertilizer is Miracle-Gro® Pour & Feed® Liquid Plant Food, which has an NPK content of 0.02-0.02-0.02. Similarly, Miracle-Gro® Liquid Quick Start® Plant Food has an NPK content of 2-12-4. Effluent from the column regenerated with potassium phosphate, AR 921A, and VF-1 contained appreciable levels of K$^+$ and phosphorous in the form of (PO$_4$)$^{3-}$. Based on the concentrations listed in Table 3, the NPK content would be 0-0.3-.08.

Even in the absence of appreciable levels of NPK, as was the case with Na$_2$SO$_4$ (Table 3), the effluent would still be suitable for use on vegetation (e.g. irrigation, general watering) since the compounds and methods described will not add substantial amounts of chloride anions to the effluent. Moreover, direct application of softener effluents onto lawns, gardens, agricultural crops, and gardens promotes water conservation and reuse.

Table 3 - Mineral Components in Brines and Effluents (ppm)

| Effluent | Na$^+$ | K$^+$ | Ca$^{2+}$ | SO$_4$$^{2-}$ | PO$_4$$^{3-}$ |
|---|---|---|---|---|---|
| KH$_2$PO$_4$ with 1,000 ppm AR 921A and 3 ppm VF-1 | 122 | 797 | 1,971 | 197 | 9,310 |
| Na$_2$SO$_4$ with 1,000 ppm AR 921A and 3 ppm VF-1 | 901 | 57 | 2,322 | 7,921 | 42 |

EXAMPLE 14 (not according to the invention)

The methods of the present invention are useful for preventing the formation of undesirable, low Ksp salts during or after ion exchange. However, these methods are also useful for increasing the efficiency of chloride-containing salts, such as NaCl or KCl. An experiment conducted in a bench top conditioner compared the performance of 500 mL of sodium chloride brine (1:4 dilution) with 500 mL of NaCl that was diluted 1:8. The brine diluted 1:8 also contained 100 ppm of low molecular weight PAA. A Taylor Test Kit (obtained from Taylor Technologies) was used to measure the hardness as CaCO$_3$ in the effluents, and the results are shown in Table 4. These data demonstrate that the calcium chelator (PAA) allowed the brine to remove 23% more hardness than expected based on its concentration.

Table 4 - Test Kit Measurements of Hardness removed by NaCl brine with PAA

| Sample | Actual CaCO$_3$ ppm | Predicted CaCO$_3$ ppm | Difference |
|---|---|---|---|
| NaCl (100 mL brine) | 1,300 | 1,300 | - |
| NaCl (50 mL brine) + 100 ppm PAA | 800 | 650 | +23.07 |

(continued)

| Sample | Actual CaCO$_3$ ppm | Predicted CaCO$_3$ ppm | Difference |
|---|---|---|---|
| 100 ppm PAA (no brine) | 0 | 0 | 0 |

Although the test kit data were sound, ICP generates data that are more accurate and qualitative. The data in Table 5 were generated with ICP and corroborate the results with the Taylor Test Kit. Almost 28% more calcium was removed when PAA was present than would have been expected, based on the amount and concentration of Na$^+$ in the brine. Also, in the absence of brine, PAA was ineffective as an ion exchange regenerant. This Example demonstrates the novelty of using a calcium binding agent to chelate calcium ions removed from the exchange resin by the influent sodium ions.

Table 5 - Ions measured with ICP

| Sample | Na$^+$ (ppm) in Brine | Actual Ca$^{2+}$ ppm in Effluent | Predicted Ca$^{2+}$ ppm in Effluent | % Difference |
|---|---|---|---|---|
| NaCl (100 mL brine) | 46,560 | 3,716 | 3,716 | -- |
| NaCl (50 mL brine) + 100 ppm PAA | 23,280 | 2,370 | 1,858 | +27.6 |
| 100 ppm PAA (no brine) | 0 | 2.2 | 0 | 0 |

EXAMPLE 15

In light of the synergy between a chloride-containing salt and calcium chelating agents as shown in Example 14, a subsequent experiment was conducted using the bench top water softeners. This experiment examined the effect of 1,000 ppm AR 921-A + 5 ppm VF-1 on Na$_2$SO$_4$ brine (500 mL) on regeneration efficiency. As with Example 14, the efficiency was based on the relative amounts of Ca$^{2+}$ removed from the resin in comparison to the concentration of Na$^+$ in the brine. The results shown in Table 6 show that calcium chelators can also increase the efficiency of the regenerant even when using non-halide salts such as Na$_2$SO$_4$.

Table 6 - Test Kit Measurements of Hardness Removed

| Sample | Na$^+$ (ppm) in Brine | Ca$^{2+}$ ppm in Effluent | Expected Ca$^{2+}$ ppm in Effluent | Difference |
|---|---|---|---|---|
| NaCl brine (1:4 dilution) | 16,550 | 4,276 | 4,276 | -- |
| Na$_2$SO$_4$ brine | 7,998 | 2,853 | 2,066 | +38 |

**Claims**

1.  A method for regenerating a water treatment ion exchange material, comprising contacting an ion exchange material with an aqueous solution or dispersion comprising ions produced from a chloride-free salt and a chelating agent, wherein:

    said chloride-free salt is selected from the group consisting of K$_2$SO$_4$, NaHCO$_3$, Na$_2$SO$_4$, NaH$_2$PO$_4$, KHCO$_3$, KH$_2$PO$_4$, K$_2$HPO$_4$, K$_3$PO$_4$, Na$_3$PO$_4$, Na$_2$CO$_3$, K$_2$CO$_3$, and mixtures thereof;
    said chelating agent is selected from polyacrylic acid, polymaleic acid, polyaspartic acid, and mixtures thereof; and
    said aqueous solution or dispersion is essentially free of chloride ions.

2.  The method of claim 1, wherein said aqueous solution or dispersion consists essentially of said chloride-free salt and said chelating agent.

3.  The method of claim 1, said aqueous solution or dispersion comprising from 1% to 10% by weight of said chloride-free salt, based upon the total weight of the solution or dispersion taken as 100% by weight.

4. The method of claim 1, said aqueous solution or dispersion comprising from 0.3% to 4% by weight of said chelating agent, based upon the total weight of the solution or dispersion taken as 100% by weight.

5. The method of claim 1, wherein said aqueous solution or dispersion further comprises an additive selected from the group consisting of binders, cleaning agents, dispersants, wetting agents, dry acids, and mixtures thereof.

6. The method of claim 1, further comprising forming said aqueous solution or dispersion by adding the chloride-free salt and chelating agent to water.

7. The method of claim 6, wherein the chloride-free salt and chelating agent are independently added to the water.

8. The method of claim 6, wherein the forming comprises adding a self-sustaining body to said water, said self-sustaining body comprising said chloride-free salt and chelating agent.

9. The method of claim 1, further comprising contacting said regenerated ion exchange material with water so as to yield softened water.

10. The method of claim 1, wherein said chloride-free salt is selected from the group consisting of $K_2SO_4$, $Na_2SO_4$, and mixtures thereof.

**Patentansprüche**

1. Verfahren zum Regenerieren eines Wasserbehandlungs-Ionentauschermaterials, umfassend das In-Kontakt-Bringen eines Ionentauschermaterials mit einer wässrigen Lösung oder Dispersion, die Ionen umfasst und aus einem chloridfreien Salz und einem Chelatisierungsmittel hergestellt ist, wobei:

das chloridfreie Salz aus der Gruppe ausgewählt ist, die aus $K_2SO_4$, $NaHCO_3$, $Na_2SO_4$, $NaH_2PO_4$, $KHCO_3$, $KH_2PO_4$, $K_2HPO_4$, $K_3PO_4$, $Na_3PO_4$, $Na_2CO_3$, $K_2CO_3$ und Gemischen davon besteht;
das Chelatisierungsmittel aus Polyacrylsäure, Polymaleinsäure, Polyasparaginsäure und Gemischen davon ausgewählt ist; und
die wässrige Lösung oder Dispersion im Wesentlichen frei von Chloridionen ist.

2. Verfahren gemäß Anspruch 1, wobei die wässrige Lösung oder Dispersion im Wesentlichen aus dem chloridfreien Salz und dem Chelatisierungsmittel besteht.

3. Verfahren gemäß Anspruch 1, wobei die wässrige Lösung oder Dispersion 1 bis 10 Gew.-% des chloridfreien Salzes umfasst, bezogen auf das Gesamtgewicht der Lösung oder Dispersion, das als 100 Gew.-% genommen wird.

4. Verfahren gemäß Anspruch 1, wobei die wässrige Lösung oder Dispersion 0,3 bis 4 Gew.-% des Chelatisierungsmittels umfasst, bezogen auf das Gesamtgewicht der Lösung oder Dispersion, das als 100 Gew.-% genommen wird.

5. Verfahren gemäß Anspruch 1, wobei die wässrige Lösung oder Dispersion weiterhin ein Additiv umfasst, das aus der Gruppe ausgewählt ist, die aus Bindemitteln, Reinigungsmitteln, Dispergiermitteln, Netzmitteln, trockenen Säuren und Gemischen davon besteht.

6. Verfahren gemäß Anspruch 1, weiterhin umfassend das Bilden der wässrigen Lösung oder Dispersion durch Hinzufügen des chloridfreien Salzes und des Chelatisierungsmittels zu Wasser.

7. Verfahren gemäß Anspruch 6, wobei das chloridfreie Salz und das Chelatisierungsmittel unabhängig voneinander zu dem Wasser hinzugefügt werden.

8. Verfahren gemäß Anspruch 6, wobei das Bilden das Hinzufügen eines selbsttragenden Körpers zu dem Wasser umfasst, wobei der selbsttragende Körper das chloridfreie Salz und das Chelatisierungsmittel umfasst.

9. Verfahren gemäß Anspruch 1, weiterhin umfassend das In-Kontakt-Bringen des regenerierten Ionentauschermaterials mit Wasser, was weichgemachtes Wasser ergibt.

**10.** Verfahren gemäß Anspruch 1, wobei das chloridfreie Salz aus der Gruppe ausgewählt ist, die aus $K_2SO_4$, $Na_2SO_4$ und Gemischen davon besteht.

**Revendications**

**1.** Procédé pour la régénération d'une matière échangeuse d'ions pour le traitement des eaux, comprenant la mise en contact d'une matière échangeuse d'ions avec une solution ou dispersion aqueuse comprenant des ions produits à partir d'un sel exempt de chlorure et un agent chélatant, dans lequel
ledit sel exempt de chlorure est choisi dans le groupe consistant en $K_2SO_4$, $NaHCO_3$, $Na_2SO_4$, $NaH_2PO_4$, $KHCO_3$, $KH_2PO_4$, $K_2HPO_4$, $K_3PO_4$, $Na_3PO_4$, $Na_2CO_3$, $K_2CO_3$, et des mélanges de ceux-ci,
ledit agent chélatant est choisi parmi l'acide polyacrylique, l'acide poly-maléique, l'acide polyaspartique, et des mélanges de ceux-ci, et
ladite solution ou dispersion aqueuse est sensiblement exempte d'ions de chlorure.

**2.** Procédé selon la revendication 1, dans lequel ladite solution ou dispersion aqueuse sensiblement consiste en ledit sel exempt de chlorure et ledit agent chélatant.

**3.** Procédé selon la revendication 1, dans lequel ladite solution ou dispersion aqueuse comprend 1 % à 10 % en poids dudit sel exempt de chlorure, par rapport au poids total de la solution ou dispersion étant égal à 100 % en poids.

**4.** Procédé selon la revendication 1, dans lequel ladite solution ou dispersion aqueuse comprend 0,3 % à 4 % en poids dudit agent chélatant, par rapport au poids total de la solution ou dispersion étant égal à 100 % en poids.

**5.** Procédé selon la revendication 1, dans lequel ladite solution ou dispersion aqueuse comprend en outre un additif choisi dans le groupe consistant en liants, agents de nettoyage, dispersants, agents mouillants, acides secs, et des mélanges de ceux-ci.

**6.** Procédé selon la revendication 1, comprenant en outre l'étape consistant à former ladite solution ou dispersion aqueuse en ajoutant ledit sel exempt de chlorure et ledit agent chélatant à de l'eau.

**7.** Procédé selon la revendication 6, dans lequel ledit sel exempt de chlorure et ledit agent chélatant sont ajoutés à l'eau indépendamment l'un de l'autre.

**8.** Procédé selon la revendication 6, dans lequel ladite étape consistant à former comprend l'ajout d'un corps autoportant à l'eau, ledit corps autoportant comprenant ledit sel exempt de chlorure et ledit agent chélatant.

**9.** Procédé selon la revendication 1, comprenant en outre la mise en contact de ladite matière échangeuse d'ions régénérée avec de l'eau pour obtenir de l'eau adoucie.

**10.** Procédé selon la revendication 1, dans lequel ledit sel exempt de chlorure est choisi dans le groupe consistant en $K_2SO_4$, $Na_2SO_4$, et des mélanges de ceux-ci.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0158990 A
- GB 1208217 A
- US 4116860 A
- US 2010048445 A
- US 3414507 A
- US 20090127502